# EUROPÄISCHE PATENTSCHRIFT

(11) **EP 1 050 430 B1**
(45) Veröffentlichungstag und Bekanntmachung des Hinweises auf die Patenterteilung: **07.06.2006**
(21) Anmeldenummer: 00109390.5
(22) Anmeldetag: 03.05.2000
(51) Int. Cl.: B60N 3/10

(54) **Halterungsvorrichtung für Gefässe in Kraftfahrzeugen**
Device for holding containers in automobiles
Dispositif pour le maintien de récipients dans des véhicules automobiles

(30) Priorität: 07.05.1999 DE 19921599
(43) Veröffentlichungstag der Anmeldung: 08.11.2000
(73) Patentinhaber: KTSN Kunststofftechnik Sachsen GmbH & Co. KG, 01796 Pirna (DE)
(72) Erfinder: Müller, Roland, Dipl.-Ing., 01458 Ottendorf-Okrilla (DE); Schupp, Steffen, Dipl.-Ing., 01099 Dresden (DE)
(74) Vertreter: Tragsdorf, Bodo

(56) Entgegenhaltungen:
- EP-A- 0 845 386
- DE-A- 4 441 265
- DE-A- 19 527 918
- DE-A- 19 543 608
- DE-A- 19 812 389
- DE-U- 29 616 554
- US-A- 4 943 111
- US-A- 5 385 325

## Beschreibung

Die Erfindung betrifft eine Halterungsvorrichtung für Gefäße, insbesondere Getränkedosen oder -flaschen, in Kraftfahrzeugen.

Im Automobilbau gehört es bereits zum Standard der Innenausstattung, daß entsprechende Getränkedosenhalter vorgesehen sind, die den Personen im Fahrzeug während der Fahrt die Einnahme von Getränken erleichtern sollen, indem die Trinkgefäße, Dosen, Flaschen oder Becher in speziell dafür geeigneten Halterungen abgestellt bzw. aufbewahrt werden können. Aus der Praxis sind vor allem Getränkedosenhalter bekannt, die im Cockpitbereich des Fahrzeuges versenkbar angeordnet sind, z.B. durch Schwenk- oder Hubbewegung.
Die durch Hubbewegung bekannten Halterungsvorrichtungen bestehen aus einem Gehäuse und einem aus dem Gehäuse aus- und einfahrbaren Schlitten, der mit mindestens einer Aufnahme für das zu haltende Gefäß verbunden ist. Zur Lagefixierung des abgestellten Gefäßes ist bei mehren bekannten Lösungen noch ein Abstützelement vorgesehen, das z.B. als schwenkbarer Bügel ausgebildet sein kann. Die Aufnahmen für das zu haltende Gefäß oder auch für mehrere Gefäße sind häufig als stabiles Kunststoffbauteil als Bestandteil des Schlittens ausgebildet und weisen entsprechende Öffnungen zum Einstellen der Gefäße auf. Das Sortiment an Getränkedosen und Getränkeflaschen ist sehr vielseitig. Die jeweiligen Behältnisse unterscheiden sich vor allem in ihrem Außendurchmesser. Trinkbecher besitzen im allgemeinen eine sich nach unten konisch verjüngende äußere Form.
In der Praxis ist es jedoch wünschenswert, daß eine Halterungsvorrichtung für im Durchmesser und in ihrer äußeren Form unterschiedliche Gefäße geeignet ist und eine sichere Halterung für diese gewährleistet. Hierzu sind bereits verschiedene Lösungen bekannt. In der DE 195 27 918 A1 ist eine Halterungsvorrichtung mit einer schwenkbaren Konsole zur Aufnahme von Gefäßen beschrieben, bei der der Innenraum zur Aufnahme des Gefäßes von einem elastischen Band durchgriffen ist. Diese Lösung hat den Nachteil, daß beim Einsetzen des Gefäßes dieses in Schräglage gebracht werden muß, um das elastische Element in die erforderliche Richtung zu bewegen, damit das Gefäß eingesetzt werden kann. Beim Einsatz eines bereits mit einem Getränk gefüllten Trinkbechers kann diese Lösung zu unerwünschten Nebeneffekten führen. Aus der EP 0 748 717 A1 ist eine Lösung bekannt, bei der unterhalb einer größeren Öffnung einer Konsole ein umlaufendes Band mit im Durchmesser verschiedenen Öffnungen angeordnet ist, die wahlweise in Deckung mit der größeren Öffnung gebracht werden können. Diese Ausführung ist in ihrer Handhabung sehr aufwendig und nur für Gefäße geeignet, für die in dem Band die passenden Öffnungen vorhanden sind. Bekannt ist auch (DE 44 41 265 A1) an einer herausfahrbaren Lade bzw. Konsole seitlich nach außen zeigende halbkreisförmige Öffnungen anzuordnen, wobei an beiden Seiten der Lade unter Federspannung stehende, verschwenkbare Seitenarme angeordnet sind, durch die das eingesetzte Gefäß festgeklemmt wird. Diese Halterungsvorrichtung ist in ihrer Herstellung sehr aufwendig. Bei im Durchmesser relativ großen Gefäßen liegt der Halterungsarm nur an einem Teilbereich des Außenumfanges des Gefäßes an, so daß keine sichere Halterung gewährleistet ist.
Aus der DE 195 43 608 A1 ist eine Vorrichtung zum Halten von Getränkebehältern bekannt, bei der in einem Gehäuse zwei teleskopartige Einsätze angeordnet sind, die aus dem Gehäuse geschoben werden und als Auflagefläche für das Gefäß dienen. Das Gefäß wird mittels klappbarer Haltebacken in der Gebrauchslage fixiert. Durch ein weiteres Herausziehen des vorderen Einsatzes kann eine entsprechende Durchmesseranpassung für größere Gefäße bewirkt werden. Die Lagefixierung des Gefäßes erfolgt im Wesentlichen durch die unter Federspannung stehenden Haltebacken. Diese Halterung ist nur für in der Höhe niedrige Gefäße geeignet, wie z.B. Tassen. Bei höheren Gefäßen besteht die Gefahr, daß diese in ihrer Lage nicht ausreichend gesichert sind. Außerdem ist diese Vorrichtung in ihrer Herstellung sehr aufwendig.
Die DE 19812 389 A1 offenbart eine Halterungsvorrichtung für Gefäße, insbesondere für Getränkedosen oder -flaschen, in Kraftfahrzeugen, bestehend aus einem Gehäuse und einem aus dem Gehäuse aus- und einfahrbaren Schlitten, der mit mindestens einer Aufnahme für das zu haltende Gefäß verbunden ist, sowie einer bodenseitigen Abstützung für das In die Aufnahme einzusetzende Gefäß, einer konkaven Anlagefläche für das Gefäß und einem Spannelement zur Halterung des Gefäßes, wobei die konkave Anlagefläche an der Längsseite des Schlittens angeordnet ist und in oder auf dem Schlitten ein in Ein- und Auszugsrichtung des Schlittens bewegbares freies Ende des Spannelementes angeordnet und in Abhängigkeit von dem Fahrweg des freien Endes zwischen dem Spannelement und der Anlagefläche des Schlittens eine in ihrer Größe veränderbare Öffnung gebildet ist.

Der Erfindung lag die Aufgabe zugrunde, eine Halterungsvorrichtung für Gefäße, insbesondere für Getränkedosen oder-flaschen oder -becher, zu schaffen, die eine sichere Halterung für Gefäße unterschiedlicher Durchmesser und/oder Form gewährleistet, sich durch einen geringen Herstellungsaufwand auszeichnet und im Innenraum eines Fahrzeuges vollständig versenkbar ist.
Erfindungsgemäß wird die Aufgabe durch die im Anspruch 1 angegebenen Merkmale gelöst. Geeignete Ausgestaltungsvarianten sind Gegenstand der Ansprüche 2 bis 15.

Das vorgeschlagene Lösungsprinzip, mittels eines ein- und ausfahrbaren Spannelementes in Form eines elastischen Ringes oder Bandes das jeweilige Gefäß in Gebrauchslage zu halten, zeichnet sich durch mehrere Vorteile aus. Gefäße unterschiedlicher Durchmesser und verschiedener Form, wie zylindrische oder konische Gefäße mit einem Volumen von 0,15 bis 1 l, können sicher und mit einer hohen Standfestigkeit festgehalten werden. Das Spannelement ist an einem Segment befestigt, das auf dem in Aus- und Einzugsrichtung verfahrbaren Schlitten auf diesem in gleicher Richtung beweglich angeordnet ist. In Abhängigkeit vom Fahrweg des Segmentes wird somit eine in ihrer Größe veränderbare Öffnung zwischen dem ausgefahrenen Teil des Spannelementes und der Anlagefläche des Schlittens erzielt. Befindet sich das Segment in der maximal ausgefahrenen Stellung, so können im Durchmesser große Gefäße abgestellt werden, wobei das Spannelement nahezu den gesamten Umfang des Gefäßes umgreift. Bei kleinen Gefäßen befindet sich das verfahrbare Segment in einer zurückgezogenen Stellung, wodurch eine kleine Umschlingung des Gefäßes bewirkt wird. Im Zusammenwirken mit der konkaven Anlagefläche des Schlittens wird ein sicheres Fixieren des Gefäßes erreicht. Die Bewegung des Segmentes kann entweder über einen eigenen Antrieb, z.B. mittels Band, Seil oder Kette, oder von einem gemeinsamen Antrieb für den Schlitten und das Segment, gesteuert werden. Der Antrieb ist mit dem Grundgehäuse fest verbunden. Durch die Bewegung des Schlittens wird das Segment mit dem Spannelement mit doppeltem Hub bewegt, bezogen auf den Hub des Schlittens. Steuerungstechnisch ist der Hub des Schlittens mit dem Hub des Segmentes abgestimmt. Eine Grundeinstellung dient zur Aufnahme von Gefäßen mit dem kleinsten Außendurchmesser, das Segment befindet sich dann in etwa auf der Mitte des Schlittens. In der Maximalstellung für die Aufnahme von Gefäßen mit einem großen Außendurchmesser befindet sich das bewegliche Segment am vorderen Ende des ausgefahrenen Schlittens. Die Halterungsvorrichtung ist sehr bedienungsfreundlich, durch einen Knopfdruck wird das Segment in die gewünschte Stellung gefahren, das Gefäß wird manuell eingestellt und durch einen weiteren Knopfdruck erfolgt ein kurzer Rückhub des Segmentes, wodurch das Gefäß leicht an die Anlagefläche angedrückt wird und einen sicheren Halt hat. In der Halterungsvorrichtung ist erforderlichenfalls ein Abstützelement integriert, das beim Ausfahren des Schlittens nach unten ausklappt und die Aufstellfläche für das Gefäß bildet. Die Halterungsvorrichtung kann an verschiedenen Stellen im Innenraum eines Fahrzeuges installiert werden. Bei einer seitlichen Anordnung in der Mittelkonsole kann ein zusätzliches Abstützelement entfallen, da der Fahrzeugboden dann als Abstellfläche für das Gefäß dient.
Ein wesentlicher Vorteil der Halterungsvorrichtung ist der geringe Fertigungsaufwand die Halterungsvorrichtung kann auch als Tandemausführung für zwei Gefäße ausgebildet werden.

Die Erfindung soll nachstehend näher erläutert werden. In der zugehörigen Zeichnung zeigen
- Fig. 1: die Halterungsvorrichtung in Gebrauchslage für ein kleines Gefäß, in perspektivischer Darstellung,
- Fig. 2: die Halterungsvorrichtung gemäß Fig. 1 als Draufsicht,
- Fig. 3: die Halterungsvorrichtung gemäß Fig. 1 als Seitenansicht,
- Fig. 4: die Halterungsvorrichtung in Gebrauchslage für ein großes Gefäß, in perspektivischer Darstellung,
- Fig. 5: die Halterungsvorrichtung gemäß Fig. 4 als Draufsicht,
- Fig. 6: die Halterungsvorrichtung gemäß Fig. 4 als Seitenansicht,
- Fig. 7: die Halterungsvorrichtung in geschlossener Stellung, in perspektivischer Darstellung,
- Fig. 8: die Draufsicht auf die Haltevorrichtung gemäß Fig. 7 und
- Fig. 9: die Seitenansicht der Haltevorrichtung gemäß Fig. 7.

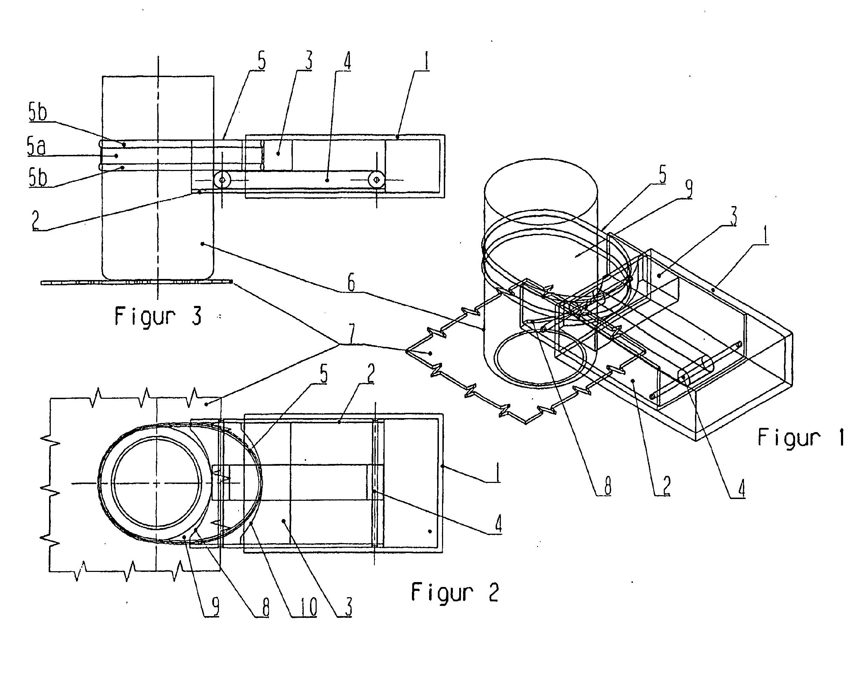

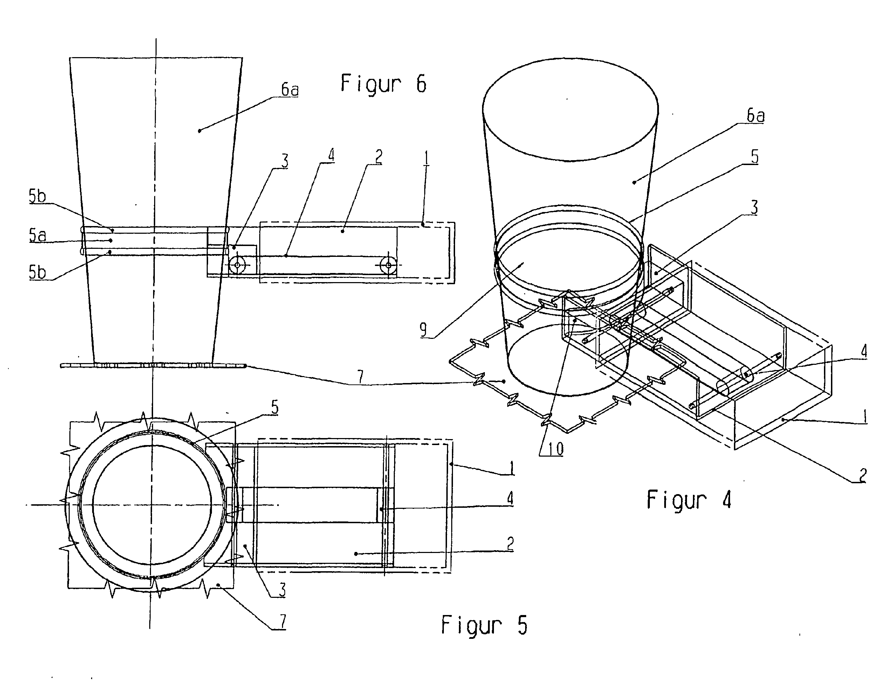

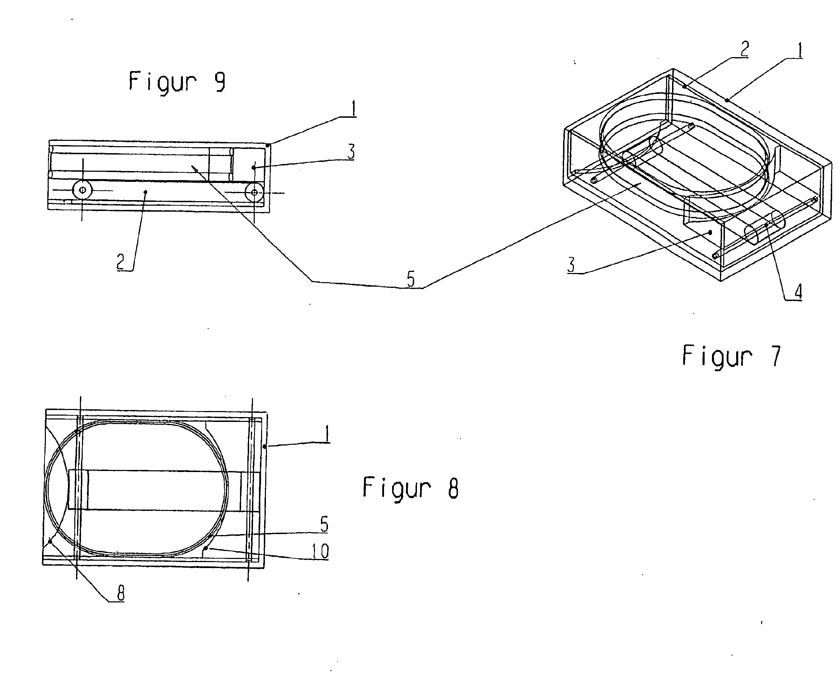

In den Figuren 1 bis 3 ist eine Halterungsvorrichtung für eine Getränkedose 6 mit einem Volumen von 0,15 l gezeigt. Die Halterungsvorrichtung besteht aus einem Grundgehäuse 1, das z.B. in eine entsprechende Öffnung im Armaturenbrett eines Kraftfahrzeuges eingesetzt wird. In dem kastenförmigen Grundgehäuse 1 ist ein in Ein- und Auszugsrichtung beweglicher Schlitten 2 angeordnet. Die Antriebseinheit und die Führungen für den Schlitten sind bekannter Stand der Technik und in den Figuren 1 bis 9 nicht mit dargestellt. Auf dem Schlitten 2 ist ein bewegliches Segment 3 angeordnet, das mittels eines Bandantriebes 4 in den gleichen Richtungen wie der Schlitten 2 bewegbar ist. An der in Auszugsrichtung zeigenden Stirnseite des Segmentes 3 ist ein elastischer Ring 5 als Spannelement befestigt. Der Ring 5 besteht aus Federstahlband 5a, der an seinen beiden äußeren umlaufenden Kanten mit einem elastischen thermoplastischen Werkstoff 5b umspritzt ist. Dadurch wird eine weiche, elastische Anlage des Ringes 5 an der Mantelfläche der Getränkedose 6 ermöglicht. Ein schematisch dargestelltes Abstützelement 7 bildet die Auflagefläche für die Getränkedose 6. Das Abstützelement kann auch als schwenkbarer Bügel ausgebildet sein, der in dem Schlitten 2 integriert ist und beim Ausfahren des Schlittens 2 nach unten ausklappt. Um eine sichere und stabile Halterung der Getränkedose 6 zu gewährleisten, ist die vordere, in Auszugsrichtung zeigende Stirnseite des Schlittens 2 als konkave Anlagefläche 8 ausgebildet. Das Segment 3 mit dem elastischen Ring 5 kann stufenweise bewegt werden, wodurch zwischen der Anlagefläche 8 und dem elastischen Ring 5 in ihrer Größe unterschiedlich einstellbare Öffnungen 9 zur Aufnahme von Gefäßen verschiedener Durchmesser entstehen. Die Größe der Öffnung 9 wird ausschließlich durch die Ausfahrstellung des Segmentes 3 bestimmt.
Wie bereits erwähnt, ist in den Figuren 1 bis 3 eine Getränkedose 6 mit einem kleinen Durchmesser gezeigt. Das auf dem Schlitten 2 verfahrbare Segment 3 ist im vollständig ausgefahrenen Zustand des Schlittens 2 auf diesem nur um ca. 50 % des maximal möglichen Hubes ausgefahren (Fig. 1). Im Vergleich dazu ist in den Figuren 4 bis 6 die gleiche Halterungsvorrichtung zur Aufnahme eines relativ großen Gefäßes, eines Trinkbechers 6a mit einem Volumen von 0,9 l, dargestellt. Zur Bildung der erforderlichen großen Öffnung 9 ist das Segment 3 bis an die mögliche Endlage des Schlittens 2 ausgefahren (Fig. 4). Da die in Auszugsrichtung zeigende Stirnseite 10 des Segmentes analog wie die des Schlittens 2 ebenfalls konkav ausgebildet ist, entsteht eine größere Anlagefläche für den Becher 6a. In den Figuren 7 bis 9 ist die Halterungsvorrichtung in geschlossener Stellung gezeigt. Der Schlitten 2 und das auf diesem verfahrbar angeordnete Segment 3 mit dem elastischen Ring 5 sind in ihrer Ausgangsstellung zurückgefahren. Während des Zurückfahrens des Segmentes 3 paßt sich der flexible Ring 5 dem Breitenmaß des Grundgehäuses 1 an und liegt im vollständig eingefahrenen Zustand in Form einer Ellipse in dem Grundgehäuse 1. Die Ausfahrbewegungen des Schlittens und des Segmentes können unter Verwendung handelsüblicher Steuerungs- und Antriebssysteme bewegt werden, wobei auch eine verrastende Stellung des Segmentes 3 in verschiedene Positionen realisiert werden kann. Steuerungstechnisch sollte der Antrieb für das Segment so ausgelegt sein, daß nach dem Einstellen des Gefäßes das Segment einen kurzen Rückhub durchführt, um ein Andrücken des elastischen Ringes an das Gefäß zu bewirken.

## Patentansprüche

1. Halterungsvorrichtung für Gefäße, insbesondere für Getränkedosen oder - flaschen, in Kraftfahrzeugen, bestehend aus einem Gehäuse (1) und einem aus dem Gehäuse (1) aus- und einfahrbaren Schlitten (2), der mit mindestens einer Aufnahme für das zu haltende Gefäß (6) verbunden ist, sowie einer bodenseitigen Abstützung (7) für das in die Aufnahme einzusetzende Gefäß, wobei in oder auf dem Schlitten (2) ein in Ein- und Auszugsrichtung des Schlittens (2) bewegbares Segment (3) angeordnet ist, das mit einem Spannelement (5) verbunden ist, das aus dem Gehäuse (1) herausbewegbar und in diesem versenkbar ist, und die Stirnseite des Schlittens (2) eine konkave Anlagefläche (8) für das Gefäß (6, 6a) aufweist, und in Abhängigkeit von dem Fahrweg des Segmentes (3), zwischen dem Spannelement (5) und der Anlagefläche (8) des Schlittens (2) eine in ihrer Größe veränderbare Öffnung (9) gebildet ist.

2. Halterungsvorrichtung nach Anspruch 1, **dadurch gekennzeichnet, daß** das Spannelement als elastischer Ring (5) ausgebildet ist.

3. Halterungsvorrichtung nach einem der Ansprüche 1 oder 2, **dadurch gekennzeichnet, daß** das Spannelement (5) als Band ausgebildet ist.

4. Halterungsvorrichtung nach einem der Ansprüche 1 bis 3, **dadurch gekennzeichnet, daß** das Spannelement (5) als Schlaufe ausgebildet ist, deren beide Enden in oder an dem Segment (3) befestigt sind.

5. Halterungsvorrichtung nach einem der Ansprüche 1 bis 4, **dadurch gekennzeichnet, daß** das Spannelement (5) aus mehreren ring- oder bandförmigen Elementen besteht.

6. Halterungsvorrichtung nach einem der Ansprüche 1 bis 5, **dadurch gekennzeichnet, daß** das Spannelement (5) aus einem elastischen Material besteht.

7. Halterungsvorrichtung nach einem der Ansprüche 1 bis 6, **dadurch gekennzeichnet, daß** das Spannelement (5) aus Federstahlband (5a) besteht, das im Bereich der umlaufenden äußeren Kanten mit einem elastischen thermoplastischen Material (5b) umspritzt ist.

8. Halterungsvorrichtung nach einem der Ansprüche 1 bis 7, **dadurch gekennzeichnet, daß** das Segment (3) mit einem separaten Antrieb (4) verbunden ist.

9. Halterungsvorrichtung nach einem der Ansprüche 1 bis 8, **dadurch gekennzeichnet, daß** die Antriebe für den Schlitten (2) und das Segment (3) getrennt steuerbar sind.

10. Halterungsvorrichtung nach einem der Ansprüche 1 bis 9, **dadurch gekennzeichnet, daß** der Antrieb für den Schlitten (2) und das Segment (3) kombiniert steuerbar sind.

11. Halterungsvorrichtung nach einem der Ansprüche 1 bis 10, **dadurch gekennzeichnet, daß** der Bewegungsablauf des Segmentes (3) vom Bediener manuell steuerbar ist.

12. Halterungsvorrichtung nach einem der Ansprüche 1 bis 11, **dadurch gekennzeichnet, daß** durch die Bewegung des Schlittens (2) das Segment (3) mit doppeltem Hub, bezogen auf den Hub des Schlittens (2), bewegbar ist.

13. Halterungsvorrichtung nach einem der Ansprüche 1 bis 12, **dadurch gekennzeichnet, daß** das Segment (3) in verschiedene verrastbare Stellungen bewegbar ist.

14. Halterungsvorrichtung nach einem der Ansprüche 1 bis 13, **dadurch gekennzeichnet, daß** das Segment (3) nach Erreichen der Gefäßaufnahmestellung und dem erfolgten Einsetzen des Gefäßes (6a) um einen geringen Hub zurückbewegbar ist.

15. Halterungsvorrichtung nach einem der Ansprüche 1 bis 14, **dadurch gekennzeichnet, daß** das Segment (3) an der in Auszugsrichtung zeigenden Stirnseite als konkave Fläche (10) ausgebildet ist.

## Claims

1. A holder device for vessels, particularly for beverage cans or bottles, in automobiles, comprising a housing (1) and a slide (2) which can be moved in and out of the housing (1) and is connected with at least one retainer for the vessel (6) to be held, as well as a support (7) at the bottom for the vessel which is to be fitted in the retainer, wherein a segment (3) which can be moved in the backward and forward direction of the slide (2) is arranged in or on the slide (2) and is connected with a clamping element (5) which can be moved out of the housing (1) and can be retracted in it, and a concave contact surface (8) for the vessels (6, 6a) is arranged on the front side of the slide (2) and an opening (9) of variable size is formed between the clamping element (5) and the contact surface (8) of the slide (2), depending on the distance covered by the segment (3).

2. The holder device according to claim 1, **characterized in that** the clamping element is designed as an elastic ring (5).

3. The holder device according to one of the claims 1 or 2, **characterized in that** the clamping element (5) is designed as a band.

4. The holder device according to one of the claims 1 to 3, **characterized in that** the clamping element (5) is designed as a loop both ends of which are fixed in or to the segment (3).

5. The holder device according to one of the claims 1 to 4, **characterized in that** the clamping element (5) consists of a plurality of ring-like or band-like elements.

6. The holder device according to one of the claims 1 to 5, **characterized in that** the clamping element (5) is made of an elastic material.

7. The holder device according to one of the claims 1 to 6, **characterized in that** the clamping element (5) is made of spring steel band (5a) being coated with an elastic thermoplastic material (5b) in the region of the circumferential outer edges.

8. The holder device according to one of the claims 1 to 7, **characterized in that** the segment (3) is connected with a separate drive (4).

9. The holder device according to one of the claims 1 to 8, **characterized in that** the drives for the slide (2) and the segment (3) can be controlled separately.

10. The holder device according to one of the claims 1 to 9, **characterized in that** the drives for the slide (2) and the segment (3) can be controlled in connection with each other.

11. The holder device according to one of the claims 1 to 10, **characterized in that** the sequence of motions of the segment (3) can be controlled manually by the operator.

12. The holder device according to one of the claims 1 to 11, **characterized in that**, on account of the slide (2) movement, the segment (3) can be moved with double stroke in relation to the stroke of the slide (2).

13. The holder device according to one of the claims 1 to 12, **characterized in that** the segment (3) can be moved into different positions where it can engage.

14. The holder device according to one of the claims 1 to 13, **characterized in that** the segment (3) can be moved back by a small stroke length after reaching the vessel receiving position and after the vessel (6a) is inserted.

15. The holder device according to one of the claims 1 to 14, **characterized in that** the segment (3) is designed as a concave surface (10) at the front side showing in the forward direction.

## Revendications

1. Dispositif de fixation pour contenants, notamment pour canettes ou bouteilles de boisson, placé dans les véhicules automobiles, composé d'un boîtier (1) et d'un élément coulissant (2) pouvant rentrer et sortir du boîtier (1) qui est raccordé à au moins un logement destiné au contenant (6) devant être maintenu, ainsi que d'un support (7) situé côté plancher et destiné au contenant devant être inséré dans le logement, un segment (3) qui peut être déplacé dans le sens de rentrée et de sortie de l'élément coulissant (2) et qui est raccordé à un élément de serrage (5) pouvant sortir du boîtier (1) et étant escamotable à l'intérieur de celui-ci étant disposé dans ou sur l'élément coulissant (2), et la face frontale de l'élément coulissant (2) présentant une surface d'appui (8) concave pour le contenant (6, 6a), et un orifice (9) dont la taille peut être modifiée étant formé, en fonction de la course du segment (3), entre l'élément de serrage (5) et la surface d'appui (8) de l'élément coulissant (2).

2. Dispositif de fixation selon la revendication 1, **caractérisé en ce que** l'élément de serrage est réalisé en anneau élastique (5).

3. Dispositif de fixation selon l'une quelconque des revendications 1 ou 2, **caractérisé en ce que** l'élément de serrage (5) est réalisé en bande (5).

4. Dispositif de fixation selon l'une quelconque des revendications 1 à 3, **caractérisé en ce que** l'élément de serrage (5) est réalisé en boucle dont les deux extrémités sont fixées sur le segment (5) ou à l'intérieur de celui-ci.

5. Dispositif de fixation selon l'une quelconque des revendications 1 à 4, **caractérisé en ce que** l'élément de serrage (5) se compose de plusieurs éléments en forme d'anneau ou de bande.

6. Dispositif de fixation selon l'une quelconque des revendications 1 à 5, **caractérisé en ce que** l'élément de serrage (5) se compose d'un matériau élastique.

7. Dispositif de fixation selon l'une quelconque des revendications 1 à 6, **caractérisé en ce que** l'élément de serrage (5) se compose d'une bande en acier à ressort (5a) surmoulée avec un matériau (5b) thermoplastique élastique sur tout le pourtour des bords extérieurs.

8. Dispositif de fixation selon l'une quelconque des revendications 1 à 7, **caractérisé en ce que** le segment (3) est raccordé à un mécanisme d'entraînement séparé (4).

9. Dispositif de fixation selon l'une quelconque des revendications 1 à 8, **caractérisé en ce que** les mécanismes d'entraînement pour l'élément coulissant (2) et le segment (3) peuvent être commandés séparément.

10. Dispositif de fixation selon l'une quelconque des revendications 1 à 9, **caractérisé en ce que** le mécanisme d'entraînement pour l'élément coulissant (2) et le segment (3) peuvent être commandés de façon combinée.

11. Dispositif de fixation selon l'une quelconque des revendications 1 ou 10, **caractérisé en ce que** le déroulement du déplacement du segment (3) peut être commandé manuellement par l'opérateur.

12. Dispositif de fixation selon l'une quelconque des revendications 1 à 11, **caractérisé en ce que** le déplacement de l'élément coulissant (2) provoque une course double du segment (3) par rapport à la course de l'élément coulissant (2).

13. Dispositif de fixation selon l'une quelconque des revendications 1 à 12, **caractérisé en ce que** le segment (3) peut être déplacé dans différentes positions d'encliquetage.

14. Dispositif de fixation selon l'une quelconque des revendications 1 à 13, **caractérisé en ce que** le segment (3) peut revenir, avec une faible course, dans sa position initiale après avoir atteint la position de logement du contenant et après l'insertion successive du contenant (6a).

15. Dispositif de fixation selon l'une quelconque des revendications 1 à 14, **caractérisé en ce que** le segment (3) est réalisé, sur la face frontale tournée dans la direction de la position sortie, en surface (10) concave.
